# EUROPEAN PATENT APPLICATION

(11) **EP 1 039 396 A2**
(43) Date of publication of application: **27.09.2000**
(21) Application number: 00300276.3
(22) Date of filing: 17.01.2000
(51) Int. Cl.: G06F 17/30

(54) **Information access system and method for providing a personal portal**

(30) Priority: 03.02.1999 US 118367 P; 30.12.1999 US; 04.02.1999 US 118651 P
(71) Applicant: AT&T Corp., New York, NY 10013-2412 (US)
(72) Inventor: Chen, Yih-Fam Robin, Bridgewater New Jersey 08807 (US); Rao, Chung-Hwa Herman, Taichung, Taiwan (TW)
(74) Representative: Asquith, Julian Peter

(57) **Abstract**

The present invention presents a system and method of providing information retrieved from a server (30) from across a communication network that has been personalized with private information that is not disclosed by the server (30). The document is retrieved from the server (30) via a standard document serving protocol channel. Before serving the document to the client, the private information is retrieved from a local storage device and merged with the information in the document to produce a customized document. In a preferred embodiment of the present invention, the process is implemented by a proxy server or a client-side proxy server connected to a standard conventional browser. The proxy server can provide filters and a scripting service to make the process of customizing the information transparent to the normal document serving protocols.

## Description

### Field of the Invention

The present invention relates generally to information access systems, and, more particularly, to information access systems used to retrieve information from across a communication network.

### Background of the Invention

As more resources become available on communication networks such as the Internet, it has become increasingly more difficult to locate, manage, and integrate them. Many information retrieval clients such as the browsers by Netscape, Microsoft, and Mosaic have been introduced to make searching and retrieving information on the network more convenient and productive for end-users. Unfortunately, the closed architecture of such browsers has rendered the software design overloaded and monopolistic. Customizing the information retrieval process is difficult if not impossible.

For example, it would be advantageous to personalize information received from many centralized web sites. Recently on the Internet there has been a heated competition among several companies to establish "portals": websites that assemble an array of services and contents to attract internet users. The consensus is that there will be only a few portals through which most customers access services and products on the internet. Therefore, the most popular portals is likely to reap top advertisement dollars and E-commerce transaction fees. Existing portals such as "My Netscape" (http://my.netscape.com), "Excite" (http://my.excite.com), "My Yahoo" (http://my.yahoo.com), are loaded with similar features such as search engines, stock quotes, maps, weather information, and news. However, most of these services have become commodities that you can obtain through companies like Infospace (http://www.infospace.com). Portal builders have been busy creating new services in a hope to retain existing customers. Recent examples include AOL's "Instant Messenger" and Netscape's "Smart Browsing" and "WebMail".

Many of these new services attempt to collect a user's profile information and detect the users presence on the Internet so as to create direct marketing channels to the user. However, none of these new services has the ability to combine the rich contents from the portal server with sensitive and private information on the client side to provide a truly personal experience. For example, imagine that a user would like to get a list of stock quotes from the server and combine that with local stock portfolio information to compute the net gain/loss and display the information on the personal portal. The user may not want to give his or her financial details to the portal server, but this is required by all portal implementations.

### Summary of the Invention

The present invention presents a system and method of providing information retrieved from a server from across a communication network that has been personalized with private information that is not disclosed by the server. The document is retrieved from the server via a standard document serving protocol channel. Before serving the document to the client, the private information is retrieved from a local storage device and merged with the information in the document to produce a customized document. In a preferred embodiment of the present invention, the process is implemented by a proxy server or a client-side proxy server connected to a standard conventional browser. The proxy server can provide filters and a scripting service to make the process of customizing the information transparent to the normal document serving protocols.

These and other advantages of the invention will be apparent to those of ordinary skill in the art by reference to the following detailed description and the accompanying drawings.

### Brief Description of the Drawings

Fig. 1 sets forth a diagram of an information access system and method illustrating an embodiment of the present invention.
Fig. 2 sets forth an example of a system architecture illustrating an embodiment of the present invention.
Fig. 3 sets forth a list of system commands that can be invoked using URL extensions.
Fig. 4 sets forth a screenshot of an example service menu.
Fig. 5 sets forth a list of commands that can be invoked using HTTP extensions.
Fig. 6 sets forth a diagram illustrating the use of filters with an information access system and method.
Fig. 7A, 7B and 7C set forth examples of cgi-bin filter programs.
Fig. 8 sets forth a list of scripting commands that can be used with a document pre-processing system.
Fig. 9 sets forth arguments for use with a javabin class invoked by the "block" and "javabin" commands in Fig. 8.
Fig. 10 sets forth a diagram illustrating the use of archiving with an information system and method.
Fig. 11 sets forth an example of a grep class for use with a walking facility.
Fig. 12 sets forth a screenshot of an example cron menu.
Fig. 13 sets forth a screenshot of an example archiving menu.
Fig. 14 sets forth a diagram illustrating the use of multiple archiving repositories.
Fig. 15 sets forth an example of scripting directives embedded in an HTML comment.
Fig. 16 sets forth a screenshot of an example personalized portal.
Fig. 17 sets forth a screenshot of an example prior art portal displaying financial information.
Fig. 18 sets forth a screenshot of an example personalized portal.

### Detailed Description

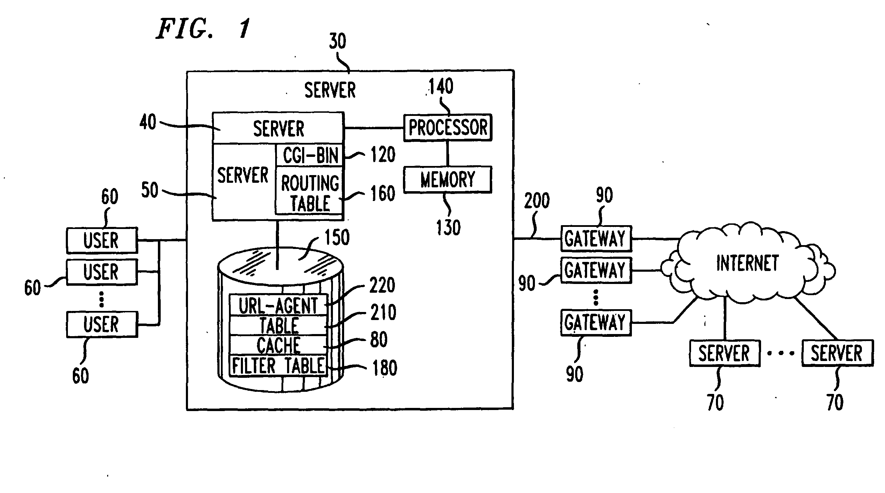

Fig. 1 shows a diagram of a communications system which is suitable to practice the present invention. In the exemplary embodiment shown, a proxy server 30 is connected to a communication network through communication link 200 to a gateway 90. The proxy 30 is shown shared by a number of clients 60 who are each executing an information retrieval program such as a browser. In an alternate embodiment, the proxy and the client browser can be executed as processes on the same client machine. Servers 70 provide information content to the clients 60 utilizing some document serving protocol, such as the Hypertext Transfer Protocol (HTTP) as described in T. Berners-Lee et al., "Hypertext Transfer Protocol - HTTP/1.0," RFC 1945, Network Working Group, 1996, which is incorporated by reference herein. As used herein, a document serving protocol is a communication protocol for the transfer of information between a client and a server. In accordance with such a protocol, a client 60 requests information from a server 70 by sending a request to the server and the sewer responds to the request by sending a document containing the requested information to the server. Servers, and the information stored therein, can be identified through an identification mechanism such as Uniform Resource Locators (URL), as described in detail in T. Berners-Lee et al., "Uniform Resource Locators," RFC 1738, Network Working Group, 1994, which is incorporated herein by reference. In an advantageous embodiment, the network is the Internet and the sewers 70 are Web sewers.

Proxy server 30, as is known the art, has a processor 140, memory 130 and a non-volatile storage device 150 such as a disk drive. The memory 130 includes areas for the storage of, for example, computer program code and data, as further described below. The proxy server 30 is shown executing two processes: an access server 40 and a web server 50, both of which are further described in the pending utility patent application, "Information Access System And Method," Serial No. 08/994,600, filed on December 19, 1997. The access server 40 behaves like a typical proxy server and accepts document requests (in a preferred embodiment, using standard TCP ports and HTTP) and routes them to other proxies or the desired server. The built-in server 50 is designed to act as a function execution engine rather than just an information provider.

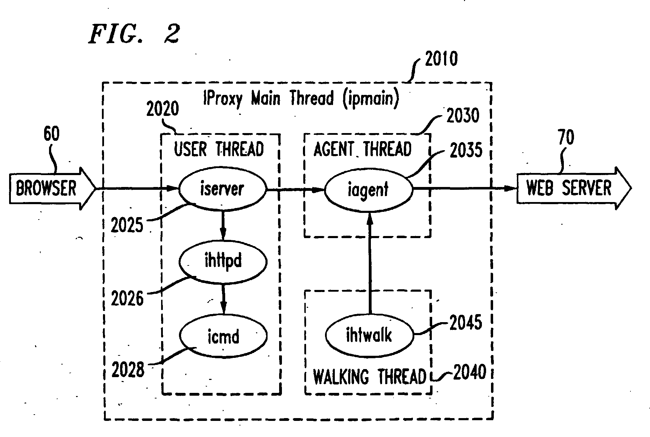

Fig. 2 illustrates an exemplary system architecture, adapted for HTTP and implemented as Java classes, providing the functionality necessary to practice an embodiment of the present invention. When the proxy application is started, the main thread 2010 listens on the proxy port and receives and responds to HTTP requests from clients 60 (browsers or other proxies). The system creates a new User Thread 2020 to serve each new request. The iserver class 2025 parses the client's request and forwards commands to iagent 2035 for remote web access or to ihttpd 2026 for localhost access. The iserver class 2025 also implements various protocol extensions further discussed below in Section 1. The ihttpd class 2026 implements the web server described above and will return an external file with the http header or execute a local CGI script to generate the replying message online. If the content is in a special scripting format described in further detail below in Section 3, icmd 2028 will be invoked to parse the script and interpret and execute any commands embedded in the document page.

The iagent class 2035 of the agent thread 2030 connects to a remote web server 70 or proxy to request a Web page. iagent 2035 can cache the page and return the page to iserver 2025 or to ihtwalk 2045, a facility to walk the html free structure to collect and archive pages. The ihtwalk class facility is further described below in Section 4 in the description of the walking facilities.

### 1. Protocol Extensions

The URL and HTTP protocols can be extended to include additional system commands that advantageously permit conventional information retrieval clients to be utilized with embodiments of the present invention. This can be accomplished in a manner that is transparent to the client browser application and, thus, requires no new user interface.

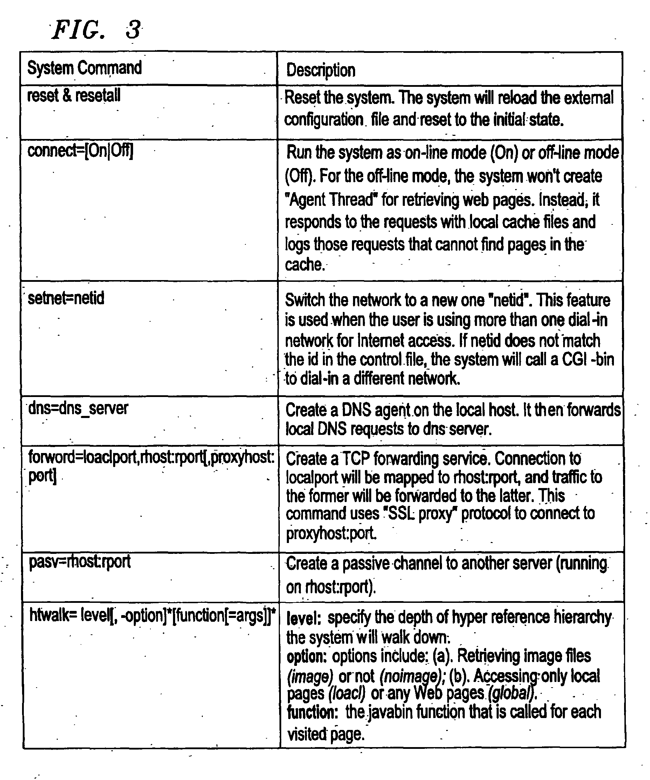

As an illustration of an example format for a URL extension is:
URL? iproxy&command
where "? iproxy" is a keyword, and "command" is a service that might be applied to a given URL or a system command that is irrelevant to the given URL. For example, the command could invoke a archiving service (as described in further detail below in Section 5) or can be used to tailor system functions. The iserver class 2025 parses the commands and forwards the command to ihttpd 2026 which, in turn, forwards the command to icmd 2028 for processing. Fig. 3 sets forth a variety of system commands that can be defined using URL extensions.

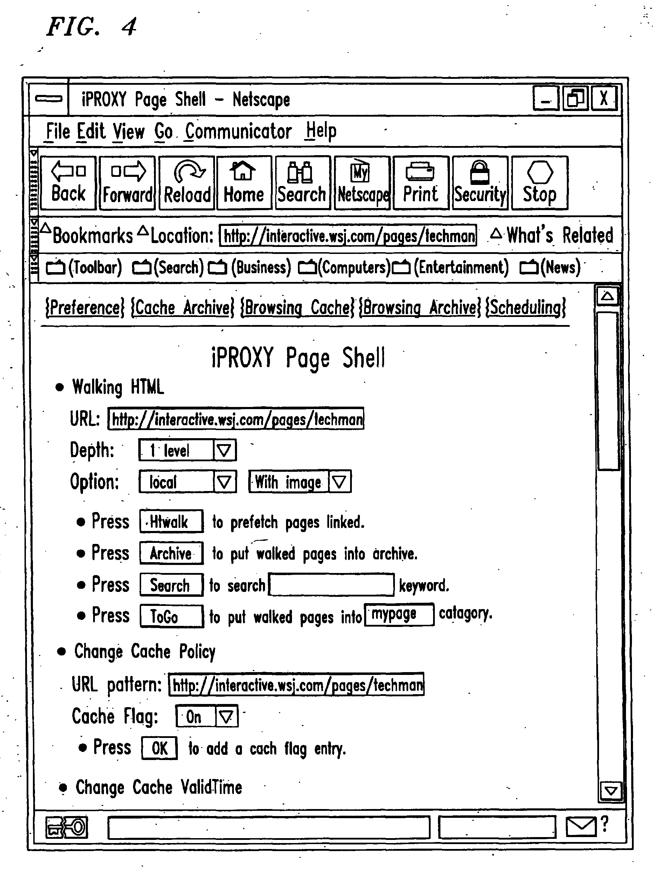

In another embodiment of the present invention, a URL extension can be used to invoke a dynamically generated menu of entry points for available services and present it to the user's browser when requested. For example, the URL naming protocol can be extended by introducing a new naming scheme:
URL??
where the double-question mark "??" is a trigger to invoke a service menu. The service menu can be implemented to inherit the same cookies as the current URL. The proxy subsystem intercepts the request from the browser with the above request pattern, generates a menu on-the-fly and returns the menu to the browser as an HTML file. Fig. 4 shows an illustrative example of a menu obtained after a user browses a webpage, here "http://www.interactive.wsj.com/pages/techmain.htm1", and types "??" after the URL and presses enter. The menu platform defines entries a number of services and user-defined macros on a per URL-set basis. For example, Fig. 4 permits the user to, inter alia, change cache policies, archive or prefetch pages in the html tree, or search the page hierarchy for a keyword. The menu system chooses the proper menu description based on the current URL.

The menu service has numerous advantages. It does not introduce a new graphical user interface, but rather presents the menu in HTML content shown in normal browsers. It preserves user's cookies and is easily extensible. New service entries can be readily plugged into the menu. The concept of the service menu is akin to pushing special keys during a traditional telephone conversation, for example, "##" - the network then places the line on hold and announces a service menu for selection; after menu selection, the line is placed back to the original conversation.

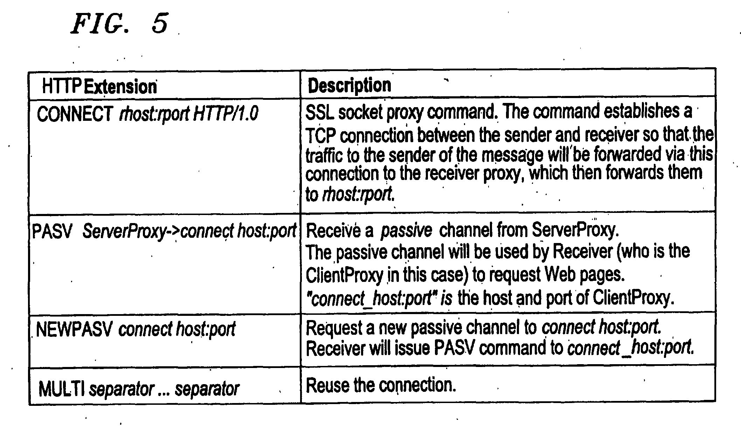

New commands can also be introduced to HTTP for special communications among multiple proxy servers to, for example, establish special connections (like persistent channels) and/or perform value-added services (like TCP forwarding). For example, the commands set forth in Fig. 5 can be defined for such communications and used to extend the conventional HTTP commands.

### 2. Filters

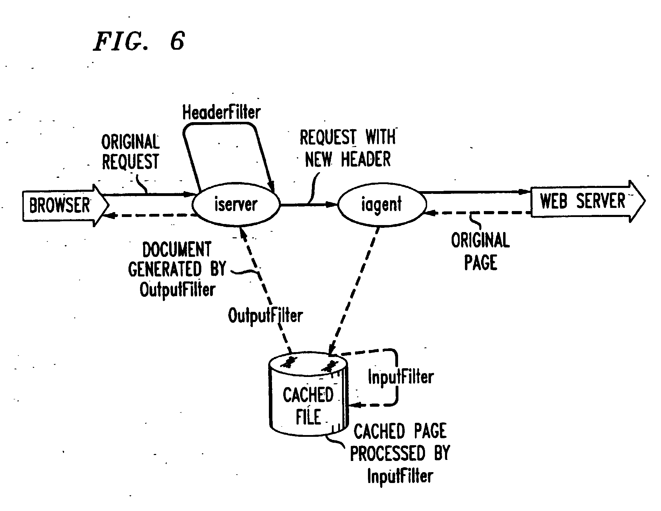

Support is provided for the processing of data by filters. Fig. 6 illustrates how filters can be applied to http headers, pages returned from the web, and pages returned from a local cache. For example, an input filter can be used to add new components (menubars, etc.) or modify returned pages (replace some remote data with local data, etc.). Data from servers can also be condensed, compressed, encrypted, patched, etc., prior to the corresponding filters converting it back into its original format before returning it to a user.

The filter functions shown in Fig. 6 can be specified in a configuration file for the proxy's built-in web server. The function can be specified with a corresponding URL pattern, such that the filter is applied to URLs matching the pattern. For example, the following entries: 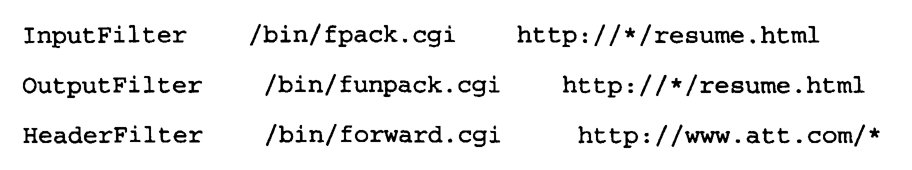 specify cgi functions for the indicated filters and URL patterns. As indicated in the HeaderFilter entry, all HTTP calls for the web server www. att. com will be processed by the cgi function forward.cgi before being sent out to the remote web server (or proxy server), and so on. Filters can also be specified using an extended URL command. For example, the system can be configured to calls filters with the arguments:
http://localhost/javabin/**inputfilter?url**=cached_url**&path**=cache_file
http://localhost/javabin/**outputfilter?url**=cached_url**&path**=cache_file
http://localhost/javabin/**headerfilter?ht.header**=header_lines

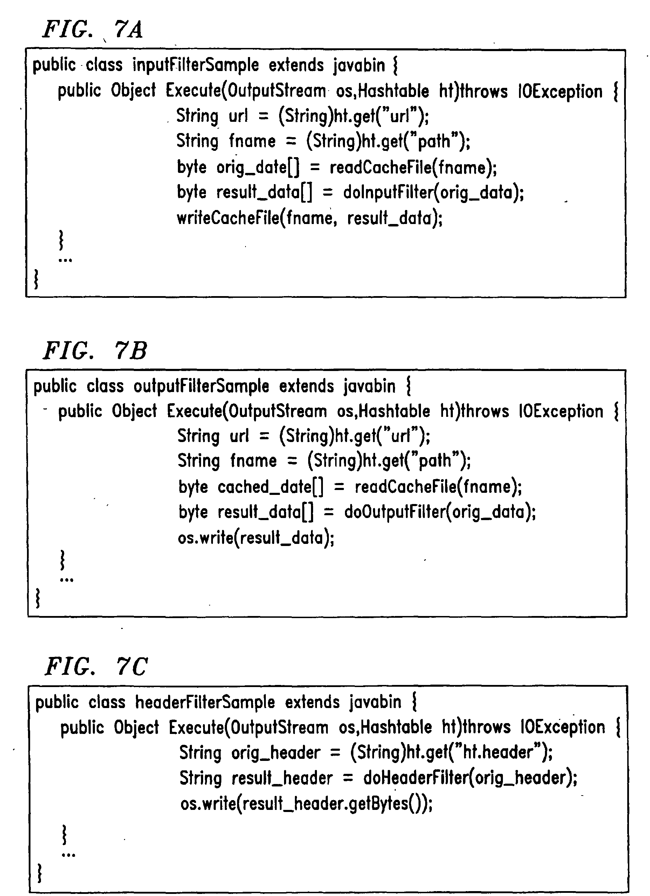

Filter programs can be implemented as cgi-bin programs and inherit the cgi-bin API. Every filter programs implemented as a Java class will create an instance when invoked. Figs. 7A, 7B, and 7C show example cgi-bin filter programs. Fig. 7A shows an inputfilter, the Execute method reading the "cache_file" and updating the file if necessary. In Fig. 7B, outputfilter uses "cache_file" as input and sends the result to OutputStream which will be sent back to the original caller. Fig. 7C shows headerfilter which gets the original http header (multiple lines without the empty line) from Hashtable, and outputs a new header to OutputStream.

### 3. Scripting Facilities

In addition to Java class invocation mechanisms and standard scripting mechanisms such as Ksh and Perl, it is advantageous to provide support for document pre-processor scripting. Proxy-side scripting allows the different system components to be integrated in a light-weight manner that has a syntax and a semantics that is very HTML-like. Scripting provides a method for plugged-in services/functions to access built-in functions, server status and data structure, and the cache. A scripting proxy preprocessor can also provide a communication media for multiple proxy servers.

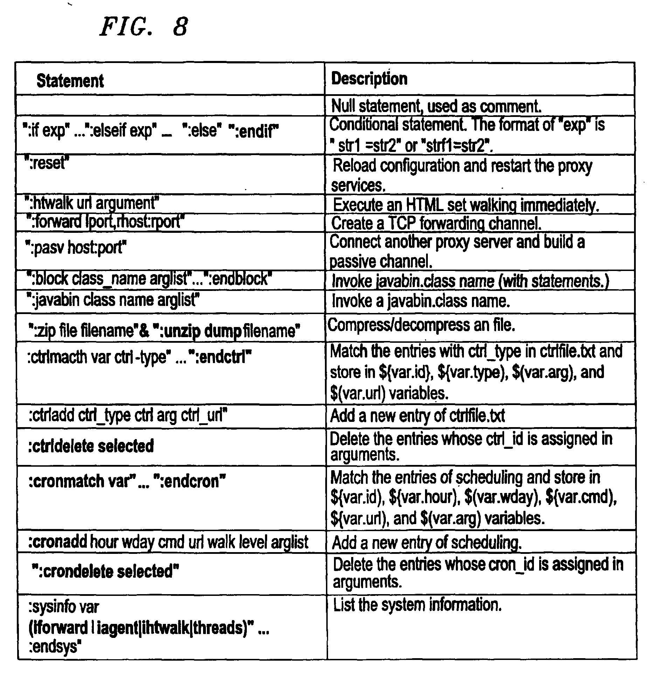

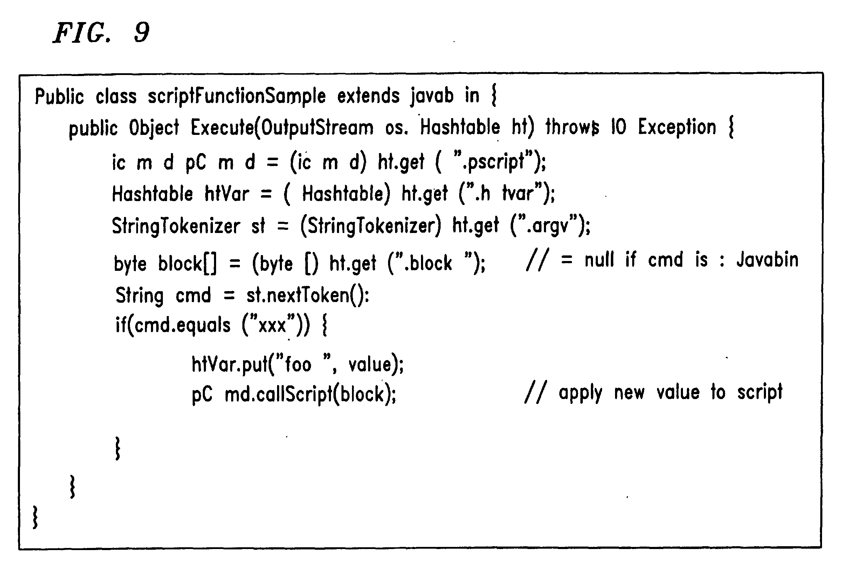

The inventors devised a scripting language providing extra macros statements based on the standard document markup language HTML. The proxy server pre-processes the scripts and turns the comments into pure HTML. In a preferred embodiment of such scripting, it should include support for variable declarations, conditional statements, sets of built-in functions, and interfaces to invoke cgi-bin. The script can be a standard HTML-like plain text file that contains the macro statements. In order to identify the document as a script, an identifier should be included; for example, the first line in the script can start with:
# ! / iproxy/script
The arguments of a cgi-bin can be accessed using "$ {arg}" inside the script file. Fig. 8 sets forth a list of built-in statements that are useful for scripting. When using the ":block" and ":javabin" commands, the script will invoke a javabin class with the arguments set forth in Fig. 9.

### 4. Walking Facilities

One useful facility is a basic function supporting a mechanism to walk through document page hierarchies. This is similar to what "find" and "tw" (file tree walk) do on Unix file systems. The walking action is specified by a root URL where the action starts, a specification of how many levels the action will visit, and certain additional properties such as whether or not image files should be included. For each visited page, one or more of a list of functions can be invoked one by one to perform tasks on a cache of the page. Examples of such functions include functions for archiving the web pages, searching for keywords, and creating index tables.

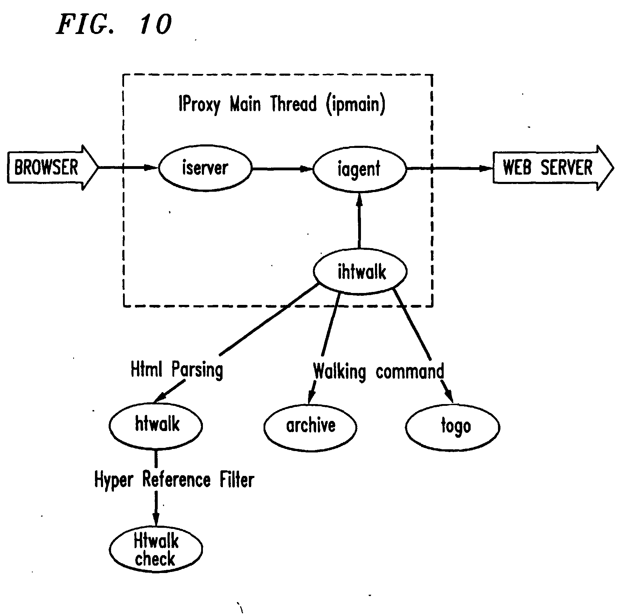

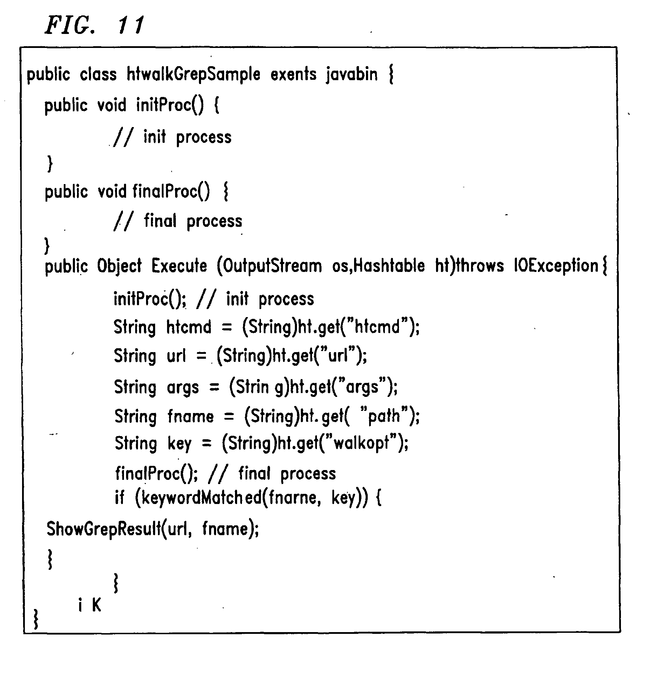

See Fig. 10 forte structure of a walking function, "htwalk", designed in accordance with a preferred embodiment of the present invention. The syntax for the walking function is given in Fig. 3. For example, for the URL
http://www.att.com/?iproxy&htwalk=3, -local, -image,archive,grep=Cable
the system walks down 3 levels for pages referred (directly or indirectly) by www. att.com, including image files, but only for those pages on the local server. For each visited page, the system calls the function archive to archive the page and the function grep to search for the keyword "Cable" in the page. For each visited page, the system calls the following cgi-bin programs one-by-one:
/bin/archive.cgi?url=visited_page&args=int_no, -local&path=cached_file &htwalk=archive
/bin/grep.cgi?url=visited_page&args=int_no, -local&path=cached_file &htwalk=grep&walkopt=Cache
Fig. 11 sets forth an example of a grep class used to implement the walking function.

### 5. Archiving Service

The URLs processed by the proxy 30 can be extended to include archive directives that add data to a storage repository, e.g. device 150, and for retrieving the archived data. The new commands are intercepted and performed by the proxy server. Because a proxy is used as a middleman between the browser and the web servers, the new archiving services are just plug-in components and do not interfere with existing components and protocols.

As an advantageous example, the URL naming scheme can be extended to include URLs in the following format:
http://view@host/path
where the "view" is a date, for example in the format yyyymmdd, when the corresponding page (i.e., http://host/path) has been retrieved from the original web server and stored into the archive repository. The timestamp can be used as the key to locate the page from the repository. For example, http://19980701@www.att.com/ would refer to the page http://www.att.com that was retrieved and archived from the www.att.com web server on July 1, 1998.

More advanced features can be implemented to allow specifying an action in front of the date for locating an alternative page on the archive server if the dated page does not exist. The system first locates the page archived on that date. If the desired page is not found in the repository, the system then searches for the page in the repository before or after the date and returns the first found page. For example, the following syntax for naming archived pages can be used:
http://[+| 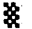 ]yyyymmdd[.hhmmss]@host/path
Thus, http://+date@host/path would choose the first page found after the specified date; on the other hand, http://-date@host/path points to the first page before the date. For example, http://+19980701@www.att.com points to the first page that was archived on July 1, 1998 or after, while http://-19980701@www.att.com is for the page archived on July 1, 1998, or before. As shown in the syntax, the granularity of "view" can be readily taken down to the second level of hours, minutes, and seconds.

The above naming scheme advantageously is compatible with the conventional URL protocol, which defines network resource naming as proto://[user[:password]@]host/path. For example, the URL ftp://foo:bar@ftp.research.att.com/README points to a README page on the FTP server ftp.research.att.com, while accessing on behalf of the user foo with the password bar. The user/password portion of the URL protocol is undefined in the HTTP protocol; accordingly, the above naming scheme can take advantage of this for archive naming.

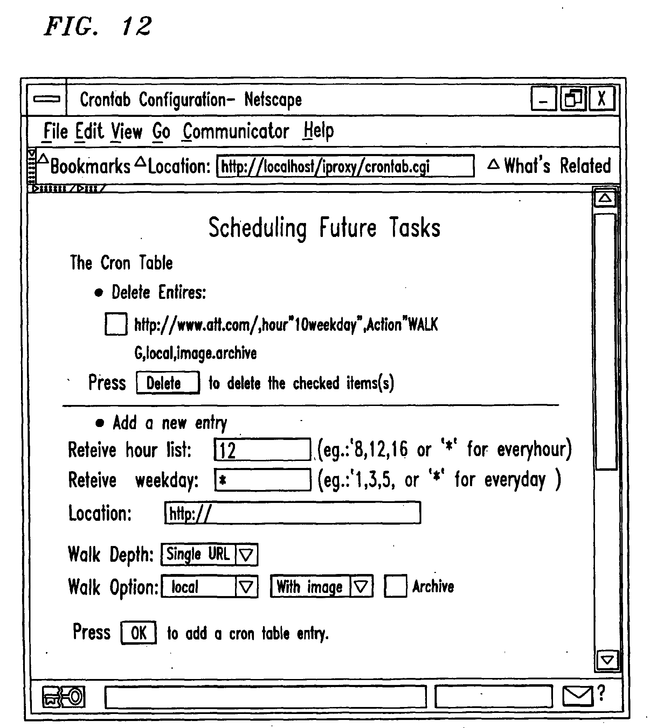

Multiple methods can be used to invoke the archive service and store data in the repository:
Command Extensions. Using any of the methods described above under Section 1, a user can invoke the archiving service. For example, the following URL:
   http://www.research.att.com/iPROXY.html?iproxy&action=archive
   can be used to cause the system to archive the page
   http://www.research.att.com/iPROXY.html.
Scheduled Archiving. The system can also be extended to contain a server that executes an archiving task at a designated time, e.g. like cron command in Unix systems. The walking facilities described above can be used to "walk" through a web site for a set of HTML pages. As described above, the walking can be defined by a root URL and parameterized by (a) the depth of walking through hyper-references under HTML pages, (b) with or without image files embedded in HTML pages, and (c) walking through pages on the local web site or on all web sites. Fig. 12 shows an example page interface for a cron cgi program which can be used to add a cron job to archive a web site. Users can schedule an archive task on a daily or weekly basis.
Transparent Archiving. The system can support a function of archiving selected web pages whenever they have been accessed automatically. The specification can be done through the CacheFlag of a cache command, which specifies the caching policy:
   CacheFlag Archive URL-expression
   Whenever a requested URL matches the URL-expression, the system puts the data in the archive repository.
Archiving Browser Cache. The system can support a function for scanning data cached on a browser's cache area and archiving them into the repository.

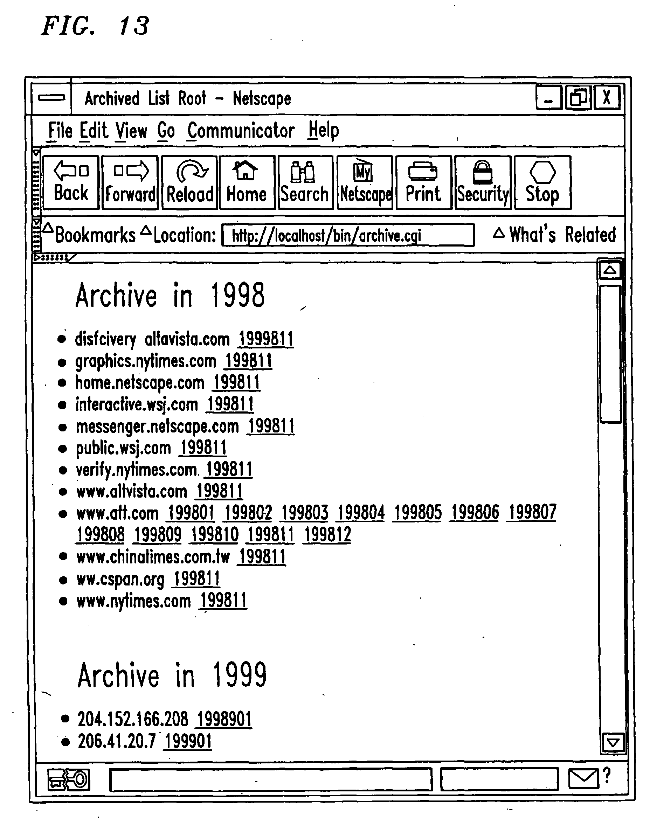

As for retrieving information from the repository, Fig. 13 shows how an example screenshot of an interface that can be used to browse the archived information. Each month's data of each website can be stored in a repository structure similar to a Unix-like pax archive. A cgi program creates a page on-the-fly based on the contents of the archive and creates hyperlinks for each website name. The hyperlinks are listed for each month when the certain pages of the website were archived. For example, the AT&T website has a cron job to archive the web pages on a daily basis, so the data in Fig. 13 has all twelve months in 1998 listed as hyperlinks.

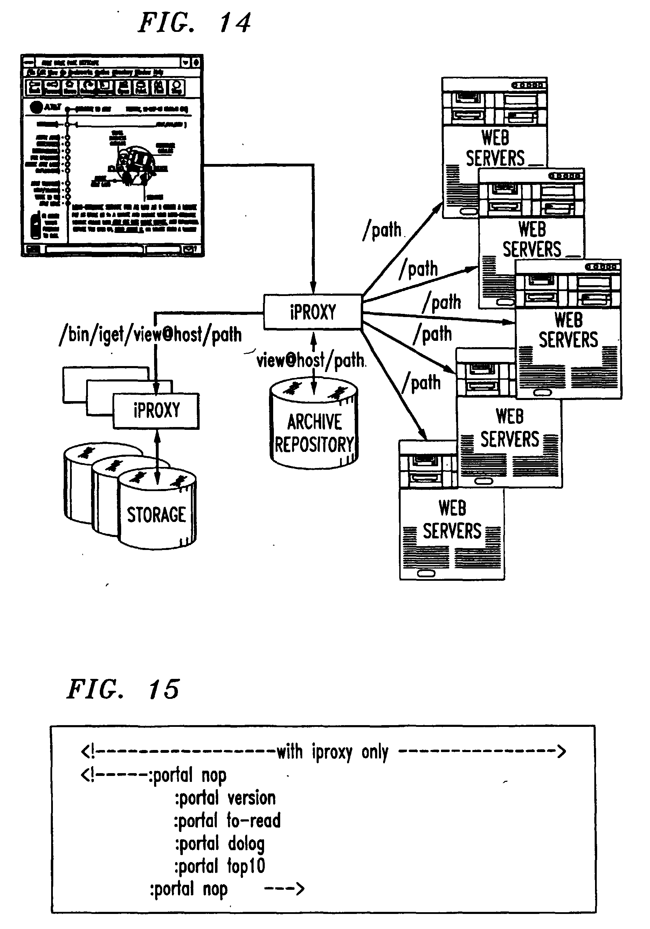

Multiple archive repositories can take advantage of the above-mentioned features for inter-proxy communication to share the burden of storing the information. For example, Fig. 14 shows how multiple archive repositories can collaborate in the archiving task. Proxy server in Fig. 14 queries another repository in order to answer a user request. As shown in Fig. 14, the following advantageous web interface can be used to search the repository or repositories:
http://proxyhost/bin/iget/view@host/path
A repository search path variable can be set using a command such as:
RepositoryPath=Host:Port[;Host:Port]*
Thus, multiple repositories may be easily addressed and accessed to quickly locate the desired information.

### 6. Packaging Service.

A packaging service can be provided which would allow the browsing of document pages from portable packages. The package is portable in that it can be possible to attach one to an e-mail or to copy one from one machine to another. To create a package, the walking facility may be used to visit the sets of web pages that are designated to be packed. Thus, the system would accept (a) a root URL, (b) a parameter expressing the depth of the walking through the root URL's direct and indirect references, (c) an image option to decide whether or not to include the image files when walking through the web pages, (d) a reference filter option (for accessing all references or filtering out some of them), (e) mechanisms for storing cookies needed for accessing the root URL, and (f) a package name. The system then walks through the set of web pages rooted by the designated URL and packs them into a package using the designated name. The package can use any of the number of known conventional compression formats to package the data. The package is advantageously self-contained, including two physical files: one for contents and another for indexing. Each package can maintain its own index table.

In order to browse the package, the proxy system can support functions to access the web pages stored in the package as if they were from the original web sites. The packages are stored on a local disk, and browsing does not require a network connection. When browsing, the server uses the above-mentioned index table to locate corresponding content in the package. The server that generates the package may be different from the one that browses the package. The cookies used to traverse the web pages are automatically handled by the system.

New documents can easily be appended to an existing package. A single package may, in fact, contain more than one root URL Each root URL in the package can be chosen as an entry point to browse the package.

### 7. Personalized Services

It is notable tat the proxy system described above can have access to a user's private information such as the web access history and sensitive financial information. A user may not be comfortable with providing this information to a server across the communication network. The same information can be stored in a safe location locally, on the client machine where the proxy has been integrated on the client-side or on a local centralized proxy closer to the user. The present invention permits several new personalized services to be provided.

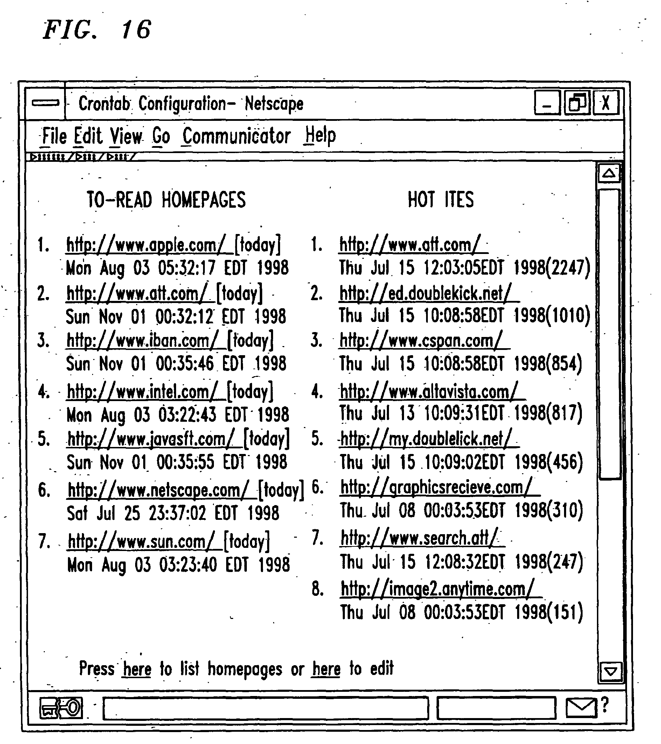

The proxy can be used to integrate in an automatic manner the information provided by a typical portal with sensitive personal information. For example, a user issues a request for the following URL:
http://www.att.net/?iproxy&action=portal
The portal command would cause the proxy server to retrieve the home page from www.att.net, which has been encoded with scripting directives that instruct the proxy server how to process the local data and merge it with the server contents. It then presents the personal portal page back to the user. In order to provide scripting that is non-intrusive to other users who are not using the present invention, the scripting directives can be embedded in HTML comments as shown in Fig. 15. The proxy server intercepts the directives in Fig. 15 and performs the necessary actions before returning the sewer portal page to the browser. All the directives, being embedded in an HTML comment, are ignored by browsers not using a proxy sewer configured in accordance with the present invention.

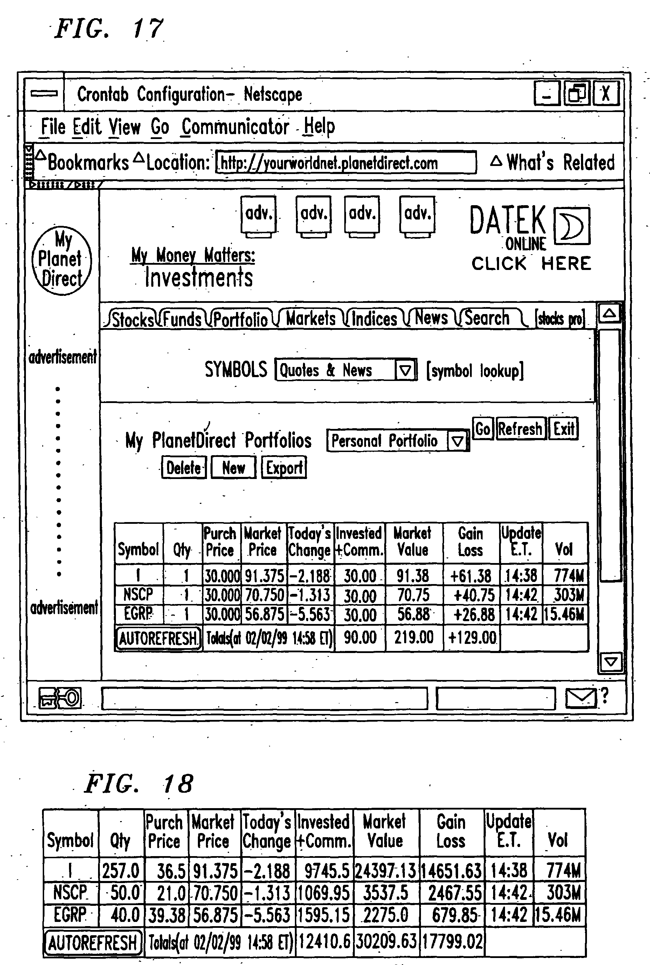

The following are some illustrative examples of how to use the capabilities of personalizing information retrieved from the public servers. They are merely examples and are not meant to limit the nature of the present invention:
Personal Web Page Reminders and Hot Sites. Since the proxy server can log a user's web accesses, it can analyze the log and use the data to provide new web services that can improve the user's browsing experience. Fig. 16 shows, for example, two possible services: (1) "TO-READ" homepages. A user can specify a list of websites and corresponding frequencies when certain websites should be visited. The proxy can check the last visiting dates and schedule a list of pages that the user should visit today. (2) "HOT Sites." The proxy sewer can compute the number of visits to each website and list the top ten websites with their last visiting dates accordingly as soon as the user accesses his/her personal portal. There are several advantages of having such a list. The user may want to know the last visiting time of a favorite site - the timestamp can be displayed along with the website link. The user may wish to access the latest version by clicking on the link. The user may wish to compare the new version with the old using some differencing tool, especially since the previous versions of the web page can be archived as described above. Fig. 15 shows the directives used to construct the page displayed in Fig. 16. The directive "to-read" constructs a list of web pages scheduled to be read; the directive "dolog" analyzes the current web access log to produce the statistics need for the next directive, "top 10" which presents the results on the personal portal.
Personalized Financial Page. Most portals currently allow users to specify the stocks that they are interested in and display the latest stock price when a user accesses the personalized page. See Fig. 17 which shows a typical AT&T WorldNet portal showing various stock quotes. However, the portal cannot compute your current balance or net gain/loss unless you provide private and sensitive information like how many shares you own and when you purchased them. Most users would not like to provide such information to their portal page server. In accordance with an embodiment of the present invention, such personalized information such as real purchase price, commission fees, and the number of shares of each stock can be stored and accessed by the proxy server. By constructing an output filter for the stock page, the proxy server can retrieve the private information, combine it with stock quotes provided by the portal site to compute the balance, net gain/loss, and other interesting personalized information/statistics. Fig. 18 shows the same view as Fig. 17 personalized with the user's information. This can be accomplished by a specification like the following in the proxy configuration file:
   OutputFilter /bin/portfolio.cgi http://stocks.planetdirect.com/portfolio.asp
   This instructs the system to apply the Java class "portfolio" as an output filter whenever the browser issues the corresponding http request. The numbers in Fig. 18 are visible only to the client and not the original portal server. The user is shown as having bought 267 AT&T shares, 50 Netscape shares, and 40 E*Trade shares at the respective prices of $36.50, $21.0, and $39.38, each. The commissions were 0, $19.95, and $19.95. The total gain was $17,799.02. The numbers replaced by the proxy server are shown in a different shade.
Personal Web Archive. While current search engines allow users to find pages of a certain topic easily, they do not offer much help in looking and viewing the pages a user has seen in the past, except for those that are still kept in the browser cache. Due to the sharp decrease in storage costs, a client-side proxy can afford to archive all the web pages a user has seen so that any of these pages can be retrieved easily later on - without even bookmarking them. Existing webpage search tools such as Alta Vista Discovery can be used to index the web archive and search the pages. A user can then quickly conduct a search of all pages he/she has seen in the last year, for example. As described in the archiving section above, the instant system can intercept http requests and effectively extend the URL name space to address pages stored in the archive by adding a timestamp m front of the regular http address. Even as the web pages go through major redesigns, the original pages can be accessed using the archive extensions to give the same content.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood tat the embodiments shown and described herein are only illustrative of the principles of the present invention and that various modifications may be implemented by those skilled in the art without departing from the scope and spirit of the invention. For example, the detailed description has been described with particular emphasis on the Internet standards of HTTP, URL's, and HTML. However, the principles of the present invention could be extended to other protocols for serving information from a server to a client. Such an extension could be readily implemented by one of ordinary skill in the art given the above disclosure.

## Claims

1. A method of providing access to information stored at a server comprising the steps of:
establishing a document serving protocol channel to a server;
receiving a document from the server via the document serving protocol channel;
retrieving local information;
customizing the document to reflect the local information before transmission of the document to the user.

2. The method of claim 1 wherein the customizing step is based on scripting commands embedded in the document.

3. The method of claim 1 wherein the customizing step is based on a filter which specifies which documents retrieved from which servers should be customized and how they should be customized.

4. The method of claim 1 wherein the local information is stored on a local storage device.

5. The method of claim 1 wherein the local information is private user information.

6. The method of claim 1 wherein the local information is user access information.

7. The method of claim 1 wherein the document serving protocol is the hypertext transfer protocol.

8. The method of claim 1 wherein the document is a web page.

9. The method of claim 1 wherein the server is a web server.

10. A computer readable medium containing executable program instructions for performing a method on a computer connected to a communication network comprising the steps of:
establishing a document serving protocol channel to a server;
receiving a document from the server via the document serving protocol channel;
retrieving local information;
customizing the document to reflect the local information before transmission of the document to the user.

11. The computer readable medium of claim 10 wherein the customizing step is based on scripting commands embedded in the document.

12. The computer readable medium of claim 10 wherein the customizing step is based on a filter which specifies which documents retrieved from which servers should be customized and how they should be customized.

13. The computer readable medium of claim 10 wherein the local information is stored on a local computer readable storage device.

14. The computer readable medium of claim 10 wherein the local information is private user information.

15. The computer readable medium of claim 10 wherein the local information is user access information.

16. The computer readable medium of claim 10 wherein the document serving protocol is the hypertext transfer protocol.

17. The computer readable medium of claim 10 wherein the document is a web page.

18. The computer readable medium of claim 10 wherein the server is a web server.

19. The computer readable medium of claim 10 wherein the network is the Internet.

20. A proxy server comprising:
a first interface for establishing a document serving protocol channel to a server;
a second interface for establishing a second document serving protocol channel to at least one client;
a storage device for storing local information;
a processor adapted to customize documents received from the server with the local information before transmission back to the user.

21. The proxy server of claim 20 wherein the customizing step is based on scripting commands embedded in the document.

22. The proxy server of claim 20 wherein the customizing step is based on a filter which specifies which documents retrieved from which servers should be customized and how they should be customized.

23. The proxy server of claim 20 wherein the local information is private user information.

24. The proxy server of claim 20 wherein the local information is user access information.

25. The proxy server of claim 20 wherein the document serving protocol is the hypertext transfer protocol.

26. The proxy server of claim 20 wherein the client is a browser.

27. The proxy server of claim 20 wherein the document is a web page.

28. The proxy server of claim 20 wherein the server is a web server.
